# FASCICULE DE BREVET EUROPEEN

(11) **EP 3 947 577 B1**
(45) Date de publication et mention de la délivrance du brevet: **10.04.2024**
(21) Numéro de dépôt: 20723455.0
(22) Date de dépôt: 27.03.2020
(51) Int. Cl.: C09D 151/00, C08F 265/06

(54) **RÉSINE ORGANIQUE PORTEUSE DE GROUPEMENTS AMINE TERTIAIRE ET ACIDE CARBOXYLIQUE ET DISPERSION AQUEUSE LA COMPRENANT, POUR COMPOSITION RÉTICULABLE BI-COMPOSANTE**
TERTIÄRES AMIN UND CARBONSÄUREGRUPPEN TRAGENDES ORGANISCHES HARZ UND DIESE ENTHALTENDE WÄSSRIGE DISPERSION FÜR EINE ZWEIKOMPONENTIGE VERNETZBARE ZUSAMMENSETZUNG
ORGANIC RESIN CARRYING TERTIARY AMINE AND CARBOXYLIC ACID GROUPS, AND AQUEOUS DISPERSION COMPRISING SAME, FOR A TWO-COMPONENT CROSSLINKABLE COMPOSITION

(30) Priorité: 28.03.2019 FR 1903294
(43) Date de publication de la demande: 09.02.2022
(73) Titulaire: ARKEMA FRANCE, 92700 Colombes (FR)
(72) Inventeur: CAMARA, Fatoumata, 60550 Verneuil En Halatte (FR); COGORDAN, Frank, 60550 Verneuil En Halatte (FR); DECOMBLE, Virginie, 60550 Verneuil En Halatte (FR); MORIERE, Franck, 60550 Verneuil En Halatte (FR)
(74) Mandataire: Arkema Patent
(86) Numéro de dépôt international: PCT/FR2020/000070
(87) Numéro de publication internationale: WO 2020/193878

(56) Documents cités:
- US-A1- 2002 176 994
- US-A1- 2003 102 217

## Description

### Domaine Technique

La présente invention selon les revendications annexées concerne une résine organique spécifique, en particulier acrylique, vinylique ou acrylique-vinylique, portant des groupements amine tertiaire et acide carboxylique, laquelle résine est apte à former une dispersion aqueuse sans tensioactif, un procédé de préparation de cette dispersion aqueuse, et des compositions réticulables bi-composantes comprenant ladite résine ou ladite dispersion aqueuse, pour la préparation de produits réticulés, sans aucun usage d'isocyanates.

Plus particulièrement, la présente invention selon les revendications annexées concerne l'obtention de revêtements réticulés ayant des performances équivalentes à celles de revêtements polyuréthane réticulés à partir d'un système réactif à deux composants, l'un étant la résine à groupements amine tertiaire et acide carboxylique de l'invention en dispersion en milieu aqueux, et l'autre une résine époxy, ceci sans besoin d'isocyanates qui sont généralement associés aux polyols pour l'obtention de revêtements polyuréthane par voie courante.

### Technique antérieure

Il est déjà bien connu comment obtenir des revêtements polyuréthane réticulés à partir d'un système bi-composant en milieu solvant organique ou en milieu aqueux en dispersion, à partir d'une résine polyol par réaction avec un polyisocyanate. Plus particulièrement, des polyols acryliques sont connus pour des applications de revêtements compte tenu de leurs meilleures performances, en particulier au vieillissement. Ces polyols sont des copolymères d'un mélange de monomères acryliques comprenant un monomère hydroxy alkyl (méth)acrylate, tel que le (méth)acrylate d'hydroxyéthyle (HE(M)A), le (méth)acrylate d'hydroxypropyle, et le (méth)acrylate d'hydroxybutyle.

L'inconvénient essentiel de ces systèmes est lié à l'utilisation d'isocyanates (polyisocyanates), agents réticulants indispensables de ces systèmes bi-composants polyuréthanes réticulés à base de résines acryliques polyols. En effet, cette utilisation pose des problèmes de toxicité, de sécurité et de nocivité pour la santé humaine et pour l'environnement en général, problèmes qui imposent des contraintes lourdes concernant leur manipulation, même en milieu aqueux, qui devient ainsi de plus en plus compliquée et coûteuse. Compte tenu de leur toxicité et de leur préparation à partir de matières premières également toxiques et nocives pour l'environnement, comme le phosgène avec émission d'acide chlorhydrique également nocif pour l'environnement, cette chimie, basée sur l'utilisation des isocyanates, a besoin d'être remplacée par des solutions moins nocives pour l'homme et l'environnement.

D'autre part, en plus des problèmes de santé humaine et d'environnement, l'utilisation d'un système réticulable polyol-isocyanate est très sensible aux conditions d'application que cela soit en milieu solvant ou aqueux (consommation d'isocyanates encore plus importante) avec consommation d'une partie des fonctions isocyanates par l'eau résiduelle dans un milieu solvanté ou par l'eau en milieu aqueux avec une stoechiométrie difficile à contrôler ayant une conséquence sur la reproductibilité des performances finales et conduisant à une surconsommation d'isocyanates par rapport à la stoechiométrie nécessaire. La consommation d'isocyanates dans le système par l'humidité ambiante ou par l'eau en milieu aqueux, avec des réactions secondaires (décarboxylation et formation de polyamines transformées en polyurées), peut affecter la structure et les performances finales du revêtement. En particulier, le dégagement de CO₂ par réaction avec l'eau conduit à la formation de bulles de CO₂ (défauts) dans le revêtement final, en particulier dans le cas de revêtements épais. Ceci est une limitation importante du système polyol-isocyanate classique en termes d'épaisseur maximale sèche possible sans ledit défaut (bulles de CO₂) pour un revêtement polyuréthane classique. Cette performance d'épaisseur sèche maximale sans ledit défaut s'appelle « la limite de piqûre » mesurée par le test de la limite de piqûre tel que défini dans les exemples (selon la norme ISO 4628-2). Dans les systèmes de revêtement polyuréthane classique (à base d'isocyanates), cette épaisseur maximale est au mieux de 70 µm. Dans les produits réticulés de l'invention, il n'y a pas ces défauts, et donc pas de limitation. L'autre inconvénient des isocyanates dans ces revêtements est leur impact élevé sur le prix de revient, en particulier accentué par la surconsommation d'isocyanates par la réaction secondaire avec l'eau. Des systèmes bi-composants nouveaux sont déjà connus de l'état de la technique sans usage de polyisocyanate (appelés NIPU : non isocyanate PU) pour remplacer les systèmes polyuréthanes à base de polyol-polyisocyanate.

En particulier, US2012/0251730 décrit une composition solvantée bi-composante capable de sécher sans utilisation de polyisocyanates ou sans résines de type mélamine-formaldéhyde comme agents réticulants. Elle est constituée d'un copolymère obtenu par polymérisation radicalaire et contenant au moins un groupement carbonate cyclique, d'une polyamine possédant au moins deux groupements aminés primaires et secondaires, optionnellement au moins un solvant, pigment et additif. Les exemples montrent un film ayant une dureté intéressante, mais ne permettent pas d'obtenir des compositions à faible taux de composés organiques volatils (COV). US2002/0176994 décrit aussi une composition de revêtement réactive, exempte d'isocyanate, obtenue à partir d'un polymère acrylique fonctionnalisé anhydride, par mélange avec d'autres polymères fonctionnalisés époxy, amine tertiaire et hydroxyl, sans que ces polymères soient copolymérisés entre eux. Le simple mélange d'un polymère hydrophobe avec un polymère hydrophile conduit cependant à des problèmes de compatibilités entre les deux polymères, des difficultés lors de la mise en émulsion et une instabilité des émulsions obtenues.

US 2003/102217 A1 décrit un procédé pour former un film de revêtement multi-couche, comprenant les étapes consistant à : appliquer une composition de revêtement par électrodéposition cationique colorée (A) sur un substrat métallique par électrodéposition ; appliquer une composition de revêtement transparente (B) contenant un pigment brillant à la surface du revêtement par électrodéposition.

Bien que les systèmes tels que décrits dans les documents cités de l'état de la technique permettent a priori l'obtention de revêtements réticulables sans faire usage d'un polyisocyanate, plusieurs problèmes supplémentaires restent à surmonter.

Au moment où les réglementations sur la réduction des COV se durcissent, il n'est pas connu dans l'état de la technique de solutions satisfaisant ce problème. Il existe donc un besoin pour de nouvelles résines, en particulier acryliques, fonctionnalisées avec des amines tertiaires aptes à former des dispersions aqueuses stables et permettant la formulation de revêtements aqueux et en particulier de peintures, vernis, encres, adhésifs, colles à basse teneur en COV, et avec une dispersion aqueuse ainsi obtenue adaptée à l'application dans les revêtements en milieu aqueux. Le problème technique à résoudre par la présente invention consiste donc d'abord à trouver une résine spécifiquement sélectionnée sans besoin d'utiliser des isocyanates, portant des groupements amines tertiaires et acide carboxylique ayant un taux élevé de solides en milieu solvant organique, apte à former une dispersion aqueuse stable au stockage, utilisable dans un système bi-composant spécifique, réticulable à température relativement basse allant de l'ambiante (20-25°C) à 150°C, avec une résine époxy comme agent réticulant, et ayant un taux de COV faible et un extrait sec (taux de solides) allant de 30 à 60%. Ce système spécifique tel que ciblé doit être un nouveau système bi-composant réticulable sans aucun usage d'isocyanate et, de ce fait et par le besoin de réduire le taux de COV, il doit être respectueux de l'environnement et de la santé, et en particulier il doit être non-sensible à l'eau et avoir des performances similaires, sinon identiques, à celles d'un système polyol-polyisocyanate comparable de l'état de la technique.

Plus particulièrement, la présente invention permet, par une sélection particulière de la composition des monomères et de la structure spécifique de ladite résine, d'avoir une bonne aptitude à former des dispersions aqueuses stables au stockage et utilisables dans des systèmes aqueux bi-composants réticulables. En particulier, la présente invention vise l'obtention d'une résine organique porteuse de fonctions réactives susceptibles d'être mises en émulsion par un procédé d'inversion de phase. La dispersion aqueuse ainsi obtenue, du fait de la faible taille de ses particules, est plus stable dans le temps que celles de l'art antérieur.

En outre, la présence de groupements amine tertiaire dans la résine de l'invention permet une réaction de réticulation auto-catalysée, sans utilisation de catalyseurs à base de dérivés métalliques type étain, lors de la formation du produit réticulé.

Parmi les principaux avantages liés au nouveau système selon la présente invention, on peut citer les suivants :
L'obtention de revêtements équivalents aux revêtements polyuréthane avec des propriétés inhérentes à ce type de revêtement, sans utilisation d'isocyanates, en particulier obtention de revêtements épais sans défauts liés à cette utilisation et avec des conditions améliorées d'hygiène et de sécurité et avec respect de l'environnement, et sans affectation significative des performances essentielles dudit revêtement ou maintien à un état de performances similaires, sinon identiques, à celles d'un système polyol-polyisocyanate comparable de l'état de la technique, réticulation à relativement basse température et en particulier dans une plage allant de l'ambiante à 150°C ;
L'obtention de systèmes aqueux bi-composants performants auto-catalysés, contrairement aux systèmes bi-composants classiques qui utilisent des catalyseurs métalliques, et plus particulièrement de l'étain ;
La formulation de revêtements, en particulier de peintures, vernis, encres, adhésifs, colles, en conformité par rapport aux tendances des réglementations en vigueur sur les COV ;
Une diminution du coût global de la formulation par rapport au système polyol- isocyanate ;
Un séchage rapide et un maintien des bonnes propriétés du film de revêtement obtenu, malgré le faible taux de COV ;
De bonnes performances d'application et, en particulier, en termes de durabilité, y compris en termes de corrosion, compromis dureté/flexibilité, adhérence sur substrat, résistance chimique et tenue thermique.

### Exposé de l'invention

La présente invention selon les revendications annexées couvre donc comme premier objet une résine organique spécifique, liant pour compositions réticulables en milieu solvant organique ou en milieu aqueux, portant des groupements amine tertiaire et acide carboxylique.

Le deuxième objet de l'invention concerne une dispersion aqueuse comprenant une résine selon l'invention, en particulier sans aucun tensioactif.

Le troisième objet de l'invention concerne un procédé de préparation d'une dispersion aqueuse selon l'invention.

Un autre objet de l'invention couvre une composition réticulable bi-composante, comprenant ladite résine ou ladite dispersion aqueuse de l'invention, et plus particulièrement comprenant en plus au moins un agent réticulant choisi parmi les résines époxy.

L'invention couvre également un substrat revêtu d'une composition de revêtement réticulable selon l'invention.

L'invention vise également l'utilisation d'une résine ou d'une dispersion aqueuse selon l'invention dans une composition réticulable bi-composante comprenant comme agent réticulant une résine époxy.

Finalement, fait également partie de l'invention, un produit réticulé, et plus particulièrement d'un revêtement réticulé, qui résulte de l'utilisation d'une résine ou d'une dispersion aqueuse selon l'invention, avec une résine époxy.

### Description détaillée

Ainsi, le premier objet de la présente invention selon les revendications annexées concerne une résine organique comprenant dans sa composition deux copolymères P1 et P2, dans des proportions en poids de P1/P2 allant de 90/10 à 60/40, et de préférence de 80/20 à 70/30, caractérisée en ce que lesdits copolymères P1 et P2 sont copolymérisés l'un à l'autre, ledit copolymère P1 porte au moins un groupement amine tertiaire, et ledit copolymère P2 porte au moins un groupement acide carboxylique.

Les copolymères P1 et P2 sont copolymérisés l'un à l'autre, de préférence par polymérisation radicalaire. Ainsi, les copolymères P1 et P2 ne sont pas simplement mélangés l'un à l'autre. En effet, la copolymérisation entre P1 et P2 permet la formation d'une pluralité de liaisons covalentes entre les copolymères P1 et P2.

La résine organique selon l'invention peut notamment être un polymère multiphasique. Par l'expression « polymère multiphasique », on entend désigner au sens de l'invention un polymère présentant une composition non homogène. Le polymère multiphasique peut être obtenu par un procédé de polymérisation séquentielle en au moins deux étapes à partir d'au moins deux compositions (ou mélanges) de monomères distinctes. En particulier, le polymère multiphasique peut comprendre au moins deux phases, une première phase S1 comprenant le copolymère P1 et une deuxième phase S2 comprenant le copolymère P2, les phases S1 et S2 étant couplées entre elles par une pluralité de liaisons covalentes. La première phase S1 peut notamment correspondre à une phase hydrophobe. La deuxième phase S2 peut notamment correspondre à une phase hydrophile, le caractère hydrophile étant apporté par la présence de fonctions acide carboxylique et éventuellement un groupe alcoxylé ou polyalcoxylé.

La résine organique selon l'invention peut notamment être obtenue en polymérisant les monomères constituant le copolymère P2 en présence du copolymère P1 et éventuellement d'un initiateur radicalaire tel qu'un peroxyde. Ainsi, les chaines en croissance générées lors de la polymérisation du copolymère P2 peuvent se greffer sur des chaines fabriquées et terminées du copolymère P1. En particulier, l'initiateur radicalaire peut arracher des atomes d'hydrogène sur ces chaines, formant ainsi des radicaux qui peuvent se combiner pour créer des liaisons covalentes entre les copolymères P1 et P2.

Selon ce mode de réalisation particulier, le polymère multiphasique obtenu pourra se réarranger après mise en émulsion, dans l'eau, de manière à obtenir une structure similaire à un coeur/écorce (ou « core/shell » en anglais), le premier copolymère P1 formant le « coeur » et le second copolymère P2 formant l'« écorce ». Cette appellation « coeur/écorce » ne doit toutefois pas être interprétée comme désignant une particule dans laquelle la partie « coeur » serait totalement revêtue ou encapsulée par une partie « écorce », mais comme désignant une particule à morphologie contrôlée présentant deux phases distinctes.

L'expression « résine soluble en milieu organique » signifie que ladite résine n'a aucune structure réticulée, auquel cas (si réticulée) elle serait insoluble dans tout solvant (milieu organique). Plus précisément, le fait que ladite résine soit soluble signifie qu'elle a une structure linéaire ou ramifiée, qui ne peut être réticulée, et qui est donc soluble en milieu organique.

Selon un mode de réalisation préféré, les copolymères P1 et P2 de la résine portent chacun au moins un groupement amine tertiaire.

Plus particulièrement, le copolymère P1 seul, ou les deux copolymères P1 et P2, portent au moins un monomère éthyléniquement insaturé porteur d'au moins un groupement amine tertiaire a), et de préférence un monomère (méth)acrylate d'aminoalkyle dans lequel ledit alkyle, linéaire ou ramifié, comprend de 1 à 12 atomes de carbone.

Au sens de la présente invention, l'expression « le copolymère X porte un monomère Y » ou « le copolymère X comprend un monomère Y » signifie que le copolymère X comprend une unité dérivée de la polymérisation d'un monomère Y. En d'autres termes, cela signifie que le copolymère X est obtenu par polymérisation d'une composition comprenant le monomère Y.

Le monomère a) peut notamment être choisi parmi le méthacrylate de 2-diméthylaminoéthyle (MADAME), l'acrylate de 2-(diméthylamino)éthyle (ADAME), le méthacrylate de 2-diéthylaminoéthyle, l'acrylate de 2-(diéthylamino)éthyle, N-(3-(N,N-diméthylamino)propyl) acrylamide, N-(3-(N,N-diméthylamino)propyl) méthacrylamide, acrylate de 3-diméthyl aminopropyle, méthacrylate de 3-diméthyl aminopropyle, acrylate de 3-diéthylaminopropyle, méthacrylate de 3-diéthylaminopropyle, 4-(N,N-diméthylamino)styrène, 4-(N,N-diéthylamino)styrène, 4-vinylpyridine, 2-diméthylaminoethyl vinyl éther, 2-diéthylaminoethyl vinyl éther, 3-diméthylaminopropyl vinyl éther, 3-diéthylaminopropyl vinyl éther, 4-diméthylaminobutyl vinyl éther et 6-diméthylaminohexyl vinyl éther et leurs mélanges.

De préférence, le monomère a) est choisi parmi le méthacrylate de 2-diméthylaminoéthyle (MADAME), l'acrylate de 2-(diméthylamino)éthyle (ADAME), le méthacrylate de 2-diéthylaminoéthyle et l'acrylate de 2-(diéthylamino)éthyle.

Ledit monomère a) représente avantageusement de 1 à 20%, et plus avantageusement de 5 à 15%, en poids du poids total de ladite résine organique.

Selon un mode de réalisation particulier, ledit monomère a) représente de 1 à 15%, et de préférence de 5 à 15%, en poids du poids total dudit copolymère P1.

Selon un mode de réalisation particulier, ledit monomère a) représente de 0 à 10%, et de préférence de 1 à 5%, en poids du poids total dudit copolymère P2.

Selon une option préférée, ledit monomère a) représente de 1 à 15%, et de préférence de 5 à 15%, en poids du poids total dudit copolymère P1, et de 0 à 10%, et de préférence de 1 à 5%, en poids du poids total dudit copolymère P2.

Au sens de la présente invention, l'expression « le monomère Y représente 1 à 20% en poids du poids total de la résine Z (ou du copolymère X) » signifie que les unités dérivées de la polymérisation du monomère Y représentent 1 à 20% en poids du poids total de la résine Z (ou du copolymère X) ». En d'autres termes, cela signifie que la résine Z (ou le copolymère X) sont obtenus par polymérisation d'une composition comprenant 1 à 20% en poids de monomère Y par rapport au poids total des monomères dans la composition.

Selon un autre mode de réalisation préféré, les copolymères P1 et/ou P2, et de préférence à la fois P1 et P2, sont des copolymères acrylique, vinylique et/ou vinylique-acrylique, y compris styrène-acrylique.

Avantageusement, les copolymères P1 et/ou P2, et de préférence à la fois P1 et P2, comprennent au moins un monomère éthyléniquement insaturé b).

Le monomère b) est distinct des monomères a), c) d) et e). Ainsi, le monomère b) ne comprend pas de groupe choisi parmi acide carboxylique, amine tertiaire, hydroxyle et groupe alcoxylé ou polyalcoxylé.

Les copolymères P1 et/ou P2, et de préférence à la fois P1 et P2, peuvent comprendre un mélange de monomères b).

Le monomère b) est de préférence choisi parmi un (méth)acrylate d'alkyle dans lequel ledit alkyle, linéaire ou ramifié, comprend au moins 4 atomes de carbone, et de préférence de 4 à 36 atomes de carbone, les monomères ayant une structure cycloaliphatique avec au moins 6 atomes de carbone, et de préférence de 6 à 18 atomes de carbone, ou parmi au moins un ester d'acides gras en C₁₈ à C₃₆ avec un hydroxyalkyle (méth)acrylate ou au moins un ester d'alcool vinylique avec au moins un acide linéaire ou ramifié comprenant au moins 6 atomes de carbone, de préférence au moins 9 atomes de carbone, et plus particulièrement de 9 à 36 atomes de carbone, l'acrylonitrile, les esters vinyliques, les monomères vinyl-aromatiques comprenant de 6 à 18 atomes de carbone, comme le styrène et ses dérivés comprenant les vinyltoluènes (ortho, méta, para), l'α-méthylstyrène, le tert-butylstyrène, le para-butylstyrène, le para-décylstyrène. Encore plus préférentiellement, ledit monomère b) est choisi parmi au moins un monomère du groupe composé de (méth)acrylate de méthyle, de butyle, de lauryle, d'isodécyle, de décyle, de dodécyle, de stéaryle, de 2-éthylhexyle, d'isooctyle, de 2-octyle, de 2-octyl décyle, de 2-octyl dodécyle, de tridécyle, les esters (monoesters) de dimères (C₃₆) d'acides gras avec un hydroxyalkyle (méth)acrylate, le (méth)acrylate de glycidyl ester d'acide carboxylique saturé ramifié en C₁₀ et en particulier hautement ramifié en C₁₀ tel que le (méth)acrylate de glycidyl ester de l'acide versatique, ledit glycidyl ester étant connu sous le nom de « Cardura^{®} E10 » ou le (méth)acrylate de glycidyl ester d'acide carboxylique ramifié en C₉, en particulier hautement ramifié en C₉ ou les vinylesters d'acide carboxylique ramifié en C₁₀, en particulier hautement ramifié en C₁₀ tel que d'acide versatique connu sous le nom commercial VeoVal10 ou les vinylesters d'acide carboxylique saturé ramifié en C₉ en particulier hautement ramifié en C₉, connu sous le nom commercial de VeoVa 9, les vinylesters d'acide gras en C₁₈, de dimères (en C₃₆) d'acides gras ou monomères à structure cycloaliphatique tels que le (méth)acrylate d'isobornyle, d'isophoryle, de tertiobutylcyclohexyle, de 3,3,5-triméthylcyclohexyle, le méthacrylate de cyclohexyle, les esters de monoalkyle ester (ester-acide), dans lequel ledit alkyle, linéaire ou ramifié, est en C₁ à C₁₈, d'acide m- ou p-hexahydrophtalique (ou d'acide 1,3 ou 1,4-cyclohexane dioïque monoesterifié par un groupe alkyle en C₁ à C₁₈) avec les hydroxyalkyle (méth)acrylates, le styrène et ses dérivés. Lesdits monomères b) les plus préférés sont choisis parmi le (méth)acrylate de méthyle, de butyle, de lauryle, d'isodécyle, de décyle, de dodécyle, de stéaryle, de 2-éthylhexyle, d'isooctyle, de 2-octyle, de 2-octyl décyle, de 2-octyl dodécyle, de tridécyle, le styrène et ses dérivés.

Ledit monomère b) représente avantageusement de 20 à 99%, et plus avantageusement de 50 à 99%, et encore plus avantageusement de 60 à 90%, en poids du poids total de ladite résine organique. Ledit monomère b) représente de préférence de 80 à 99%, et plus préférentiellement de 85 à 95%, en poids du poids total du copolymère P1. Ledit monomère b) représente de préférence de 65 à 90%, et plus préférentiellement de 70 à 80%, en poids du poids total du copolymère P2.

Selon un autre mode de réalisation préféré, le copolymère P2 comprend au moins un monomère éthyléniquement insaturé porteur d'au moins un groupement acide carboxylique c).

Le terme « groupement acide carboxylique » signifie un groupe -COOH et ses dérivés. Les dérivés d'acides carboxyliques sont des groupes pouvant générer un ou deux groupes -COOH par hydrolyse, notamment les anhydrides (-C(=O)-O-C(=O)-). Les anhydrides peuvent être linéaires ou cycliques.

De préférence, le monomère c) est choisi parmi les monomères suivants : acide (méth)acrylique, acide et anhydride itaconique, acide et anhydride maléique, acide fumarique, acide et anhydride crotonique, acide et anhydride tétrahydrophtalique, les hémi-esters de diacide carboxylique avec un hydroxyalkyl (méth)acrylate dans lequel ledit alkyle, linéaire ou ramifié, comprend de 2 à 4 atomes de carbone, et peut être éventuellement alcoxylé, en particulier par un groupement alcoxy comprenant de 2 à 4 atomes de carbone, les hémi-esters de diacide carboxylique avec un oligomère monohydroxylé de polyéther-mono(méth)acrylate ou de polyester-mono(méth)acrylate, de préférence les oligomères polyéthers diols ou polyesters diols servant de base à ces oligomères (méth)acrylés porteur d'une fonction acide carboxylique ayant une masse moléculaire moyenne en nombre Mn (calculée par mesure des fonctions terminales) inférieure à 1000 et de préférence inférieure à 500.

Selon une option particulièrement préférée, le copolymère P2 comprend au moins un monomère c) sélectionné parmi l'acide (méth)acrylique et l'acide itaconique, et encore plus préférentiellement l'acide (méth)acrylique.

Selon un mode de réalisation encore plus préféré, le copolymère P1 est exempt de groupement acide carboxylique.

Ledit monomère c) représente avantageusement de 0,5 à 10%, et plus avantageusement de 1 à 5%, en poids du poids total de ladite résine organique. Ledit monomère c) représente avantageusement de 0,5 à 10%, et plus avantageusement de 1 à 5%, en poids du poids total du copolymère P2.

Selon un autre mode de réalisation préféré, le copolymère P2 comprend au moins un groupement alcoxylé ou polyalcoxylé.

Avantageusement, le copolymère P2 comprend au moins un monomère éthyléniquement insaturé porteur d'au moins un groupement alcoxylé ou polyalcoxylé d), et de préférence un monomère mono(méth)acrylate alcoxylé ou un monomère mono(méth)acrylate polyalcoxylé choisi parmi le mono(méth)acrylate d'étheralkyle dans lequel ledit alkyle, linéaire ou ramifié, comprend de préférence de 1 à 12 atomes de carbone (tel que l'acrylate de 2-méthoxyéthyle), le mono(méth)acrylate d'alcoxy-polyalkylèneglycol, et le mono(méth)acrylate d'aryloxy-polyalkylèneglycol. Encore plus avantageusement, ledit monomère d) est un monomère mono(méth)acrylate d'alcoxy-polyalkylèneglycol choisi parmi le mono(méth)acrylate de méthoxypolyéthylèneglycol ou le mono(méth)acrylate d'éthoxypolyéthylèneglycol, ayant de préférence un poids moléculaire moyen en nombre Mn allant de 150 à 1000 g/mol, et plus préférentiellement de 300 à 600 g/mol, et encore plus préférentiellement est le méthacrylate de méthoxy polyéthylène glycol (350) ou l'acrylate de 2-(2-éthoxyéthoxy)-éthyle.

Ledit monomère d) représente de préférence de 0 à 10%, et plus préférentiellement de 1 à 10%, et encore plus préférentiellement de 0,5 à 5%, en poids du poids total de ladite résine organique. Ledit monomère d) représente de préférence de 0 à 10%, et plus préférentiellement de 1 à 10%, et encore plus préférentiellement de 0,5 à 5%, en poids du poids total du copolymère P2.

Selon un mode de réalisation encore plus préféré, le copolymère P1 est exempt de groupement alcoxylé ou de chaîne polyalcoxylé (polyéther) latérale (issu d'un monomère porteur dudit groupement alcoxylé ou de ladite chaîne polyalcoxylé (polyéther) latérale).

Selon un autre mode de réalisation préféré, le copolymère P2 comprend au moins un groupement hydroxylé.

Avantageusement, ledit copolymère P2 comprend au moins un monomère éthyléniquement insaturé porteur d'au moins un groupement hydroxylé e), et de manière encore plus avantageuse un monomère choisi parmi le (méth)acrylate d'hydroxyéthyle (HE(M)A), le (méth)acrylate d'hydroxypropyle, et le (méth)acrylate d'hydroxybutyle.

Ledit monomère e) représente de préférence de 0 à 10%, et plus préférentiellement de 0 à 5%, en poids du poids total de ladite résine organique. Ledit monomère e) représente de préférence de 0 à 10%, et plus préférentiellement de 0 à 5%, en poids du poids total du copolymère P2.

Les copolymères P1 et/ou P2 peuvent encore comprendre d'autres monomères optionnels présents pour ajuster les performances finales de la résine en fonction de son utilisation. Ils sont différents des monomères a), b), c), d) et e), et peuvent porter des groupements fonctionnels différents que lesdits monomères. Ces autres monomères optionnels ne portent aucun groupement susceptible de réagir avec un groupement fonctionnel d'un autre monomère composant de ladite résine, toute réaction de réticulation dans la préparation de ladite résine étant exclue.

Cela signifie que la composition de la résine est choisie de telle manière qu'aucune réaction interne (de réticulation) ne puisse avoir lieu entre deux monomères composants de ladite résine. En fait, aucune réaction de réticulation interne dans ladite résine ne doit avoir lieu par le fait d'un seul monomère ou par le fait de deux ou plusieurs monomères réactifs entre eux. En effet, par définition, ladite résine est soluble en milieu organique et donc ne peut pas être sous forme réticulée dans sa structure interne.

Comme exemples d'autres monomères optionnels, on peut citer les monomères suivants, sous condition de différentiation par rapport aux monomères a), b), c), d) et e) : les monomères porteurs de groupement amide tel que l'acrylamide, les monomères porteurs de groupement uréido, les monomères porteurs des groupements acétoacétoxy, les monomères éthyléniquement insaturés comprenant un groupement aliphatique linéaire ou ramifié ayant un nombre d'atomes de carbone inférieur à 4.

Le copolymère P1 est de préférence exempt de groupement hydroxylé.

Selon un mode de réalisation préféré de l'invention, la résine de l'invention est exempte de groupement anhydride.

Le copolymère P1 est avantageusement plus hydrophobe que le copolymère P2.

Au sens de l'invention, on entend par polymère « hydrophobe » un polymère comprenant des monomères hydrophobes, c'est-à-dire ayant peu d'affinité avec l'eau ou qui est peu soluble dans l'eau. Une méthode d'estimation de cette hydrophobie est celle de mesure du coefficient de partage de la substance à évaluer, entre l'octanol et l'eau, avec l'hydrophobie exprimée en logarithme de ce coefficient de partage. La valeur d'hydrophobie logKow pour un monomère est une estimation calculée du logarithme du coefficient de partage (log P) entre l'octanol et l'eau, par la méthode de contribution des atomes et des fragments structuraux de la molécule, en utilisant pour cette estimation le logiciel (programme d'estimation) EPI (Estimation Program Interface) Suite^{®} appelé KowWin de SRC (Syracure Research Corporation). La méthode et programme epi 4.11 utilisé pour ce calcul (estimation) de logKow pour les monomères, sont disponibles à l'adresse http://www.epa.gov/oppt/exposure/pubs/episuite.htm. Cette méthodologie est décrite par W. M. Meylan et P. H. Howard en 1995 dans « Atom/fragment contribution method for estimating octanol-water partition coefficients » dans Pharm. Sci. 84:83-92. Le coefficient de partage P correspond au rapport de la concentration chimique dans la phase octanol par rapport à la concentration chimique dans la phase aqueuse dans un système avec deux phases en équilibre. Concernant un copolymère, en particulier tel qu'une résine définie selon l'invention, la valeur globale d'hydrophobie selon l'invention, basée sur le logarithme du coefficient de partage octanol/eau, est définie comme étant la valeur moyenne en poids sur l'ensemble des monomères composants de la résine et elle est en particulier estimée par la moyenne en poids sur l'ensemble de monomères composants, des valeurs logKow individuelles calculées par la méthode KowWin, comme décrite ci-haut.

Ainsi, la différence d'hydrophobie entre P1 et P2, exprimée en logarithme du coefficient de partage octanol/eau, en particulier en logKow selon la méthode KowWin décrite ci-haut, est d'au moins 0,15 unités, et de préférence d'au moins 0,25 unités, et encore plus préférentiellement d'au moins 0,30 unités, et P1 ayant un indice d'acide nul ou significativement nul ou significativement inférieur à celui de P2.

Selon un mode de réalisation préféré de l'invention, les copolymères P1 et P2 ont des températures de transition vitreuse différentes, de préférence avec P2 ayant une Tg plus élevée que P1, en particulier supérieure d'au moins 5°C, et de préférence supérieure d'au moins 10°C à la Tg de P1. Le copolymère P1 a de préférence une température de transition vitreuse allant de -40 à 120°C, et le copolymère P2 a de préférence une température de transition vitreuse allant de -35 à 125°C.

La résine de l'invention présente avantageusement un indice d'acide d'au moins 5, et de préférence allant de 10 à 60 mg KOH/g.

La résine de l'invention présente avantageusement un indice d'amine d'au moins 3, et de préférence allant de 5 à 50 mg KOH/g.

La résine de l'invention a de préférence une masse moléculaire moyenne en nombre Mn, mesurée par GPC (en équivalent polystyrène, dans le THF) allant de 500 à 20000 g/mol, et de préférence de 1000 à 8000 g/mol.

La résine de l'invention a de préférence une masse moléculaire moyenne en poids Mw, mesurée par chromatographie d'exclusion stérique, allant de 5000 à 50000 g/mol, et de préférence de 10000 à 20000 g/mol.

La résine de l'invention peut se présenter sous forme de solution dans au moins un diluant organique, de préférence polaire, ayant un taux en poids de résine allant de 70 à 98%, et de préférence allant de 80 à 95%. Ainsi, le diluant organique porte de préférence au moins un groupement polaire. Comme exemples convenables de tels diluants, on peut citer ceux comprenant des groupements esters, éthers, sulfoxydes, amides, alcools, cétones ou aldéhydes. Le diluant organique est de préférence choisi parmi les éthers de glycol, et plus préférentiellement parmi l'éthylène glycol, le propylène glycol, le dipropylèneglycol, et le butylglycol. Ledit diluant ne doit pas réagir avec les groupements fonctionnels portés par la résine de l'invention.

La résine de l'invention est avantageusement auto-dispersible dans l'eau après neutralisation, sans nécessité d'ajout de tensioactif ou de dispersant. Le terme « résine auto-dispersible » signifie une résine capable de se disperser spontanément dans une phase aqueuse basique sous faible agitation. Cette faculté est notamment due à la présence de groupes ionisables sur la résine, en particulier à la présence de groupements acide carboxylique qui peuvent être neutralisés par ajout d'une base.

Ainsi, le deuxième objet de l'invention concerne une dispersion aqueuse de résine, laquelle dispersion comprend au moins une résine telle que définie selon l'invention sous forme dispersée dans l'eau, ladite résine étant partiellement ou totalement neutralisée. Totalement ou partiellement neutralisée se réfère au groupement acide carboxylique de ladite résine. Selon une préférence particulière, ladite dispersion aqueuse est exempte de tout tensioactif. Ceci signifie que ladite résine est apte par sa composition et structure spécifique à former une dispersion stable sans besoin d'aucun tensioactif.

La neutralisation peut être réalisée avec une base organique, laquelle dans les conditions de neutralisation neutralise sélectivement les groupements acide (carboxylique de ladite résine sans affecter les autres groupements de ladite résine. L'agent neutralisant est de préférence une amine organique, plus préférentiellement une amine secondaire (telles que la diéthanolamine, le N-méthyléthanolamine, la diméthylamine, la dibutylamine) ou une amine tertiaire, et encore plus préférentiellement porteuse d'au moins un groupement hydroxy, comme par exemple la diméthylaminoéthanol (DMAE) ou la triéthanolamine (TEOH).

Selon un mode de réalisation préféré, la dispersion de l'invention est partiellement neutralisée avec un taux de neutralisation d'au moins 40%, et de préférence d'au moins 50%, des groupements acide carboxylique de ladite résine.

La dispersion aqueuse de l'invention est avantageusement exempte de tensioactif et de dispersant.

Dans la dispersion de l'invention, les particules de polymère mesurent avantageusement de 50 à 300 nm, plus avantageusement de 80 à 200 nm, et encore plus avantageusement de 100 à 150 nm. La mesure de taille des particules de polymère est réalisée par diffusion dynamique de la lumière.

La dispersion de l'invention peut avoir un extrait sec allant de 30 à 60%, et de préférence de 40 à 60%. Ce taux peut être mesuré selon la méthode ISO3251.

La viscosité Brookfield de la dispersion aqueuse de l'invention, mesurée à 25°C, varie préférentiellement de 50 à 1500 mPa.s, plus préférentiellement de 200 à 1000 mPa.s, et encore plus préférentiellement de 400 à 800 mPa.s. Une telle viscosité permet une formulation aisée de la composition réticulable bi-composante finale, sans affectation de ses conditions d'application.

Un troisième objet de la présente invention concerne un procédé de préparation d'une dispersion aqueuse de résine selon l'invention comprenant les étapes suivantes :
i- préparation d'une résine selon l'invention en solution dans au moins un diluant organique, et de préférence dans au moins un diluant organique polaire,
ii- neutralisation partielle ou totale des groupements acide carboxylique de ladite résine, de préférence par ajout d'une amine, et plus préférentiellement par ajout d'une solution de diméthylaminoéthanol (DMAE) ou de triéthanolamine (TEOH), sans affecter les autres groupements de ladite résine,
iii- préparation d'une dispersion aqueuse de ladite résine par addition d'eau jusqu'à inversion de phase, de préférence à une température allant de 50 à 80°C.

Dans le procédé de l'invention, ladite résine peut être une résine acrylique, vinylique ou vinylique-acrylique, y compris styrène-acrylique, et dans ce cas, l'étape i- de préparation de ladite résine est réalisée par polymérisation radicalaire en milieu solvant.

Plus particulièrement, l'étape i- de préparation de ladite résine comprend la préparation desdits copolymères P1 et P2 en deux étapes successives i1- et i2- dans le même réacteur :
i1- la préparation en solution d'un premier copolymère P1 tel que défini selon l'invention, et
i2- la préparation d'un deuxième copolymère P2 tel que défini selon l'invention, dans le même réacteur contenant déjà ledit premier copolymère P1,
lesdits copolymères P1 et P2 étant par la suite copolymérisés l'un à l'autre, de préférence par polymérisation radicalaire.

Le procédé de l'invention peut également comprendre une étape supplémentaire iv- d'élimination du diluant organique, de préférence par entraînement (également appelé « strippage ») à la vapeur d'eau ou entraînement avec un gaz inerte.

Le procédé de l'invention peut également comprendre une étape supplémentaire v- d'ajustement de la dilution finale de ladite dispersion aqueuse par rapport au taux final de solide visé.

La présente invention concerne également une composition réticulable bi-composante, et plus particulièrement une composition de revêtement réticulable bi-composante, exempte d'isocyanate comprenant au moins une résine selon l'invention ou au moins une dispersion aqueuse selon l'invention, en milieu solvant organique ou en milieu aqueux, et de préférence en milieu aqueux.

Selon un mode de réalisation préféré, ladite composition réticulable bi-composante comprend au moins une résine selon l'invention ou au moins une dispersion aqueuse selon l'invention, et une résine époxy comme agent réticulant. Avantageusement, la composition réticulable bi-composante de l'invention est une composition réactive bi-composante comprenant une résine époxy en dispersion aqueuse ou en dilution dans l'eau. Ladite résine époxy réagit avec la résine de l'invention lors de son addition pour évoluer de manière irréversible dans le temps vers un revêtement réticulé formant un réseau polymère de masse moléculaire infinie et de structure tridimensionnelle. Par conséquent, l'addition de l'agent réticulant époxy se fera juste avant l'utilisation finale et l'application de la composition de revêtement réticulable.

La résine époxy utilisée comme agent réticulant dans la composition réactive bi-composante de l'invention présente avantageusement une teneur en époxy supérieure à 5 mg KOH/g, et encore plus avantageusement supérieure à 15 mg KOH/g. L'extrait sec de ladite résine époxy varie avantageusement de 30 à 100%.

La composition réticulable bi-composante de l'invention est avantageusement exempte de catalyseur à base de dérivés métalliques.

Selon un cas particulièrement préféré, ladite composition réticulable bi-composante de l'invention comprend un diluant organique de ladite résine en solution et ledit diluant est réactif avec ladite résine époxy (agent réticulant) telle que définie précédemment.

Ladite résine comprend avantageusement au moins un monomère sélectionné parmi l'oxyde d'éthylène, l'oxyde de propylène, le (méth)acrylate de glycidyle, le produit de réaction d'une épihalohydrine telle que l'épichlorhydrine avec un alcool polyhydrique ou un phénol tel que le bisphénol A ou le bisphénol F.

Ladite résine époxy peut être ajoutée dans la composition réticulable bi-composante, soit telle quelle et être dispersée/solubilisée dans ladite composition, soit sous forme de solution ou dispersion aqueuse préformée.

Selon un mode de réalisation préféré de l'invention, la composition réticulable bi-composante est une composition de revêtement parmi peinture, vernis, encre, adhésif, colle, et de préférence une composition aqueuse de revêtement choisie parmi les compositions aqueuses de peinture ou de vernis.

Un autre objet de l'invention concerne un substrat revêtu d'une composition réticulable bi-composante selon l'invention, ledit substrat étant de préférence choisi parmi les substrats en métal, verre, bois, y compris aggloméré et contreplaqué, plastique, métal, béton, plâtre, composite, textile.

La présente invention concerne également l'utilisation d'une résine selon l'invention ou d'une dispersion aqueuse selon l'invention, dans une composition réticulable bi-composante comprenant comme agent réticulant une résine époxy. Plus particulièrement, l'invention vise l'utilisation d'une résine selon l'invention ou d'une dispersion aqueuse selon l'invention, pour la préparation d'une composition réticulable bi-composante choisie parmi les compositions aqueuses de revêtement, de préférence les compositions aqueuses de peintures, vernis, encres, adhésifs, colles, et encore plus préférentiellement les compositions aqueuses de peinture ou de vernis.

Dans cette utilisation, lesdites compositions réticulables bi-composantes peuvent être des compositions de revêtement de protection, en particulier des compositions de revêtement de finition ou des compositions de revêtement anticorrosion, ou des compositions de revêtement de décoration. Ces compositions de revêtement ont des performances de haute résistance à l'usure et à l'abrasion et/ou à un usage intensif dans des conditions climatiques sévères d'usage externe continu et sont particulièrement adaptées pour des applications dans les domaines suivants : construction et rénovation ferroviaire, automobile, transport routier, naval, aéronautique, machinerie agricole, engins de travaux publics, éoliennes, plateformes pétrolières, containers, édifices métalliques, armatures métalliques, coil ou bâtiment y compris ameublement, parquet, menuiserie et charpentes.

Enfin, le dernier objet de l'invention vise le produit réticulé final obtenu. Il s'agit d'un produit réticulé résultant de l'utilisation d'une résine selon l'invention ou d'une dispersion aqueuse selon l'invention, avec comme agent réticulant une résine époxy.

Outre les dispositions qui précèdent, l'invention comprend encore d'autres dispositions qui ressortiront du complément de description qui suit, qui se rapporte à des exemples de synthèse de résines organiques et de dispersions aqueuses de résines selon l'invention, et à des exemples comparatifs, ainsi qu'à leur évaluation dans des compositions réticulables bi-composantes.

### EXEMPLES

### Méthodes de mesure

Dans la présente demande les méthodes de mesure suivantes ont été utilisées :
Mesure de l'extrait sec (taux de solides) de la résine organique : selon ISO 3251 :2019 (1g de résine en solution pendant 1 heure à 125°C).

Indice d'acide de la résine : selon ISO 2114:2000 (exprimé en mg de KOH par g de résine sèche).

Mesure des poids moléculaires en nombre Mn et des poids moléculaires en poids Mw : par GPC dans le THF avec étalonnage à base d'étalons de polystyrènes monodispersés, avec Mn exprimés en équivalents polystyrène. Les conditions de mesure étaient les suivantes :
Colonnes à base de gel réticulé de polystyrène-divinylbenzène (PS-DVB) (2 colonnes mixtes D (ref. 1110-6504) + 1 colonne 100Å (ref 1110-6520) + 1 colonne 50Â (ref. 1110-6515), (7.8mm x 300mm) commercialisées par Agilent
Eluant : THF
Débit de phase mobile (THF) : 1 ml/min,
T° : 35°C,
détection RI
Calibration : étalons PS (Mw : 465.600, 364.000, 217.000, 107.100, 45.120, 19.500, 9.570, 4.750, 3.090, 1.230, 580, 162 g/mol).

Mesure du pH de l'émulsion : mesuré selon la norme ISO 976:2013.

Mesure de la viscosité des dispersions aqueuses : mesurée sur un viscosimètre Brookfield (selon la norme ISO 2555:2018) à une température de 25°C.

Taille moyenne de particule et indice de polydispersité : mesurés par diffraction de la lumière selon la norme ISO 22412:2017.

Dureté Persoz : La dureté Persoz est mesurée après application avec un filmographe d'une composition de peinture humide d'une épaisseur de 350 µm sur une plaque d'acier QD46 (dans une salle climatisée à 23°C, et 50% d'humidité relative). La dureté Persoz est mesurée sur pendule pendant 14 jours selon la norme NF EN ISO 1522 Mars 2007(dans une salle climatisée à 23°C, et 50% d'humidité relative).

Brillance 20°/60° : La brillance est mesurée après application avec un filmographe d'une composition de peinture humide d'une épaisseur de 350 µm sur une plaque d'acier QD412 (dans une salle climatisée à 23°C, et 50% d'humidité relative) et séchage pendant 24h. Les mesures de brillance à 20° et 60° sont réalisées selon la norme NF EN ISO 2813 Septembre 1999 (dans une salle climatisée à 23°C, et 50% d'humidité relative).

Epaisseur sèche : L'épaisseur sèche est mesurée après application avec un filmographe d'une composition de peinture humide d'une épaisseur de 350 µm sur différents types de plaques : plaque d'acier QD412, plaque d'acier QD46 et plaque d'acier S46 (dans une salle climatisée à 23°C, et 50% d'humidité relative) et séchage pendant 24h. Les mesures d'épaisseur sèche sont réalisées selon la norme NF EN ISO 2808 Avril 2007. Les résultats présentés sont une moyenne de cinq mesures.

Séchage hors poussière : Le séchage hors poussière est mesuré après application avec un filmographe d'une composition de peinture humide d'une épaisseur de 350 µm sur une plaque d'acier QD412 (dans une salle climatisée à 23°C, et 50% d'humidité relative). Quinze minutes après l'application, le film est mis en contact avec des billes de verre à différents temps, puis dépoussiéré à l'aide d'un pinceau jusqu'à décollement complet des billes de la surface de la peinture, pour déterminer le séchage hors poussière de la peinture selon la norme NF EN ISO 1517 Juin 1995.

Résistance chimique : La résistance chimique est évaluée après application avec un filmographe d'une composition de peinture humide d'une épaisseur de 350 µm sur une plaque d'acier S46 (dans une salle climatisée à 23°C, et 50% d'humidité relative). La résistance chimique est mesurée à l'aide d'un abrasimètre linéaire Taber^{®} après séchage du film pendant une semaine dans une salle climatisée à 23°C, et 50% d'humidité relative. La résistance à la méthyléthylcétone (MEK) du film de peinture est évaluée par le temps nécessaire (en secondes) pour l'usure de la surface de la peinture avec un poids d'un kilo équipé d'une mèche en coton imbibée de MEK en effectuant des allers-retours sur le revêtement à tester, jusqu'à destruction totale de la peinture.

### Exemple 1 : Préparation d'une résine organique selon l'invention et d'une dispersion aqueuse comprenant ladite résine

### Synthèse de la résine organique de l'invention :

180 g de 2-butoxyéthanol et 78 g de polypropylène glycol (Mn = 1000 g/mol) sont introduits dans un réacteur de 2 litres. Le réacteur est ensuite porté à 150°C sous balayage d'azote. En parallèle, 465 g de styrène, 292,5 g de méthacrylate de méthyle, 213 g d'acrylate de butyle, 42 g de méthacrylate de lauryle, et 112,5 g de méthacrylate de 2-diméthylaminoéthyle, sont mélangés pour former un copolymère P1 de Tg = 41 ,2°C. Une solution de 33,8 g de peroxyde de ditertiobutyle (DTBP) et 16,9 g de peroctoate de tertiobutyle (TBPO) dans 50,6 g de 2-butoxyéthanol est également préparée. Ces deux préparations sont alors introduites en parallèle dans le réacteur, sur une durée de 3 heures à 150°C.

A la fin de ces additions, le milieu est gardé à la même température pendant 30 minutes, avant d'être refroidi à 135°C.

Parallèlement, un mélange de 90 g de styrène, 84 g de méthacrylate de méthyle, 93 g d'acrylate de butyle, 13,5 g de méthacrylate de lauryle, 42 g d'acide acrylique, 37,5 g de méthacrylate de 2-diméthylaminoéthyle et 15 g de monométhacrylate de méthoxypolyéthylèneglycol (pour former un copolymère P2 de Tg = 23,8°C), ainsi qu'une solution de 11,25 g de DTBP et de 5,63 g de TBPO dans 16,88 g de 2-butyoxyéthanol sont préparés.

Les deux préparations de copolymères P1 et P2 sont introduites dans un réacteur à 135°C pendant une durée de 2 heures. La température est ensuite gardée constante à 135°C pendant 1 heure supplémentaire.

L'extrait sec de la résine organique obtenue est de 84,7%, son indice d'acide de 24,2 mg de KOH/g, et son indice d'amine calculé de 35,7 mg de KOH/g. La masse moléculaire moyenne en nombre Mn de cette résine mesurée par GPC, avec comme solvant le THF et avec étalonnage par des polystyrènes monodisperses, est de 2400 g/mol.

### Préparation d'une dispersion aqueuse comprenant la résine organique de l'invention :

567,4 g de la résine organique ainsi préparée est partiellement neutralisée par l'ajout de 111 mL d'une solution à 10% en volume de diméthyléthanolamine dans l'eau pendant une période de 10 minutes. Durant cette étape, la température passe de 70 à 65°C, et la vitesse d'agitation est réglée à 150 rpm (rotations par minute). Après 15 minutes d'agitation à 65°C, 440 g d'eau sont introduits en 45 minutes sous une vitesse d'agitation de 250 rpm (rotations par minute), avec inversion de phase au cours de cette addition. La dispersion aqueuse obtenue est ensuite diluée avec de l'eau pour obtenir un extrait sec de 43,6%, un pH de 9,1, une viscosité de 600 mPa.s, et une taille de particules mesurée de 142 nm avec un indice de polydispersité de 0,041.

La composition de la résine organique de l'exemple 1 de l'invention est récapitulée dans le Tableau 1 ci-après (les quantités sont exprimées en % en poids) :

**[Tableau 1]**

| | Copolymère P1 | Copolymère P2 | Résine organique |
|---|---|---|---|
| Monomères | % poids P1 (par rapport au poids total de monomères) | % poids P2 (par rapport au poids total de monomères) | % poids (par rapport au poids total de monomères) |
| Styrène | 31,0 | 6,0 | 37,0 |
| Acrylate de butyle | 14,2 | 6,2 | 20,4 |
| Méthacrylate de méthyle | 19,5 | 5,6 | 25,1 |
| Méthacrylate de 2-diméthylaminoéthyle | 7,5 | 2,5 | 10,0 |
| Méthacrylate de lauryle | 2,8 | 0,9 | 3,7 |
| Acide acrylique | 0 | 2,8 | 2,8 |
| Monométhacrylate de méthoxy-polyéthylèneglycol (SR550 de Sartomer) | 0 | 1,0 | 1,0 |

### Exemple 2 : Préparation d'une résine organique selon l'invention (sans méthacrylate de 2-diméthylaminoéthyle dans le copolymère P2) et d'une dispersion aqueuse comprenant ladite résine

### Synthèse de la résine organique de l'invention :

168 g de 2-butoxyéthanol et 72,8 g de polypropylène glycol (Mn = 1000) sont introduits dans un réacteur de 2 litres. Le réacteur est ensuite porté à 150°C sous balayage d'azote. En parallèle, 420 g de styrène, 266 g de méthacrylate de méthyle, 184,8 g d'acrylate de butyle, 39,2 g de méthacrylate de lauryle et 140 g de méthacrylate de 2-diméthylaminoéthyle sont mélangés pour former un copolymère P1 de Tg = 44,6°C. Une solution de 31,5 g de peroxyde de ditertiobutyle (DTBP) et 15,8 g de peroctoate de tertiobutyle (TBPO) dans 47,25 g de 2-butoxyéthanol est également préparée. Ces deux préparations sont alors introduites en parallèle dans le réacteur, sur une durée de 3 heures à 150°C.

A la fin de ces additions, le milieu est gardé à la même température pendant 30 minutes, avant d'être refroidi à 135°C.

Parallèlement, un mélange de 95,8 g de styrène, 85,4 g de méthacrylate de méthyle, 100,98 g d'acrylate de butyle, 12,6 g de méthacrylate de lauryle, 39,2 g d'acide acrylique, et 14 g de monométhacrylate de méthoxypolyéthylèneglycol (pour former un copolymère P2 de Tg = 24,7°C), ainsi qu'une solution de 10,5 g de DTBP et de 5,25 g de TBPO dans 15,75 de 2-butyoxyéthanol sont préparés.

Les deux préparations de copolymères P1 et P2 sont introduites dans un réacteur à 135°C pendant une durée de 2 heures. La température est ensuite gardée constante à 135°C pendant 1 heure supplémentaire.

L'extrait sec de la résine organique obtenue est de 85,3%, son indice d'acide est de 27,0 mg de KOH/g, et son indice d'amine calculé de 35,7 mg de KOH/g. La masse moléculaire moyenne en nombre Mn de cette résine telle que mesurée par GPC, avec comme solvant le THF et avec étalonnage par des polystyrènes monodisperses, est de 3750 g/mol.

### Préparation d'une dispersion aqueuse comprenant la résine organique de l'invention :

407 g de la résine organique ainsi préparée est partiellement neutralisée par l'ajout de 86,92 mL d'une solution à 10% en volume de diméthyléthanolamine dans l'eau sur une période de 10 minutes. Durant cette étape, la température passe de 90 à 65°C, et la vitesse d'agitation est réglée à 150 rpm (rotations par minute). Après 15 minutes d'agitation à 65°C, 291,69 g d'eau sont introduits en 45 minutes sous une vitesse d'agitation de 250 rpm (rotations par minute), avec inversion de phase au cours de cette addition. La dispersion aqueuse obtenue est ensuite diluée avec de l'eau pour obtenir un extrait sec de 45,5%, un pH de 8,3, une viscosité de 230 mPa.s, et une taille de particules mesurée de 184 nm avec un indice de polydispersité de 0,036.

La composition de la résine organique de l'exemple 2 de l'invention est récapitulée dans le Tableau 2 ci-après (les quantités sont exprimées en % en poids) :

**[Tableau 2]**

| | Copolymère P1 | Copolymère P2 | Résine organique |
|---|---|---|---|
| Monomères | % poids P1 (par rapport au poids total de monomères) | % poids P2 (par rapport au poids total de monomères) | % poids (par rapport au poids total de monomères) |
| Styrène | 30,0 | 7,0 | 37,0 |
| Acrylate de butyle | 13,2 | 7,2 | 20,4 |
| Méthacrylate de méthyle | 19,0 | 6,1 | 25,1 |
| Méthacrylate de 2-diméthylaminoéthyle | 10,0 | 0 | 10,0 |
| Méthacrylate de lauryle | 2,8 | 0,9 | 3,7 |
| Acide acrylique | 0 | 2,8 | 2,8 |
| Monométhacrylate de méthoxy-polyéthylèneglycol (SR550 de Sartomer) | 0 | 1 | 1,0 |

### Exemple 3 : Préparation d'une résine organique comparative (exempte de méthacrylate de 2-diméthylaminoéthyle) et d'une dispersion aqueuse comprenant ladite résine

### Synthèse de la résine organique comparative :

168 g de 2-butoxyéthanol et 72,8 g de polypropylène glycol (Mn = 1000 g/mol) sont introduits dans un réacteur de 2 litres. Le réacteur est ensuite porté à 150°C sous balayage d'azote. En parallèle, 484,4 g de styrène, 304,6 g de méthacrylate de méthyle, 221,8 g d'acrylate de butyle, et 39,2 g de méthacrylate de lauryle, sont mélangés pour former un copolymère P1 de Tg = 41 ,2°C. Une solution de 31,5 g de peroxyde de ditertiobutyle (DTBP) et 15,8 g de peroctoate de tertiobutyle (TBPO) dans 47,25 g de 2-butoxyéthanol est également préparée.

Ces deux préparations sont alors introduites en parallèle dans le réacteur, sur une durée de 3 heures à 150°C.

A la fin de ces additions, le milieu est gardé à la même température pendant 30 min, avant d'être refroidi à 135°C.

Parallèlement, un mélange de 95,8 g de styrène, 89,4 g de méthacrylate de méthyle, 98,98 g d'acrylate de butyle, 12,6 g de méthacrylate de lauryle, 39,2 g d'acide acrylique, et 14 g de monométhacrylate de méthoxypolyéthylèneglycol (pour former un copolymère P2 de Tg = 23,8°C), ainsi qu'une solution de 10,5 g de DTBP et de 5,25 g de TBPO dans 15,75 de 2-butyoxyéthanol sont préparés.

Les deux préparations de copolymères P1 et P2 sont introduites dans un réacteur à 135°C pendant une durée de 2 heures. La température est ensuite gardée constante à 135°C pendant 1 heure supplémentaire.

L'extrait sec de la résine organique obtenu est de 85,8%, et son indice d'acide est de 24 mg de KOH/g. La masse moléculaire moyenne en nombre Mn de cette résine mesurée par GPC, avec comme solvant le THF et avec étalonnage par des polystyrènes monodisperses, est de 5400 g/mol.

### Préparation d'une dispersion aqueuse comprenant la résine organique comparative :

416 g de la résine organique ainsi préparée est partiellement neutralisée par l'ajout de 81,63 mL d'une solution à 10% en volume de diméthyléthanolamine dans l'eau sur une période de 10 minutes. Durant cette étape, la température passe de 90 à 65°C, et la vitesse d'agitation est de 150 rpm (rotations par minute). Après 15 minutes d'agitation à 65°C, 332,43 g d'eau sont introduits en 45 minutes sous une vitesse d'agitation de 250 rpm (rotations par minute), avec inversion de phase au cours de cette addition. La dispersion aqueuse obtenue est ensuite diluée avec de l'eau pour obtenir un extrait sec de 45,7%, un pH de 7,6, une viscosité de 95 mPa.s, et une taille de particules mesurée de 195 nm avec un indice de polydispersité de 0,014.

La composition de la résine organique de l'exemple 2 comparatif est récapitulée dans le Tableau 3 ci-après (les quantités sont exprimées en % en poids) :

**[Tableau 3]**

| | Copolymère P1 | Copolymère P2 | Résine organique |
|---|---|---|---|
| Monomères | % poids P1 (par rapport au poids total de monomères) | % poids P2 (par rapport au poids total de monomères) | % poids (par rapport au poids total de monomères) |
| Styrène | 34,6 | 6,8 | 41,4 |
| Acrylate de butyle | 15,8 | 7,1 | 22,9 |
| Méthacrylate de méthyle | 21,8 | 6,4 | 28,2 |
| Méthacrylate de 2-diméthylaminoéthyle | 0 | 0 | 0 |
| Méthacrylate de lauryle | 2,8 | 0,9 | 3,7 |
| Acide acrylique | 0 | 2,8 | 2,8 |
| Monométhacrylate de méthoxy-polyéthylèneglycol (SR550 de Sartomer) | 0 | 1,0 | 1,0 |

### Exemple 4 : Préparation d'une résine organique comparative (sans méthacrylate de 2-diméthylaminoéthyle dans le copolymère P1) et d'une dispersion aqueuse comprenant ladite résine

### Synthèse de la résine organique comparative :

168 g de 2-butoxyéthanol et 72,8 g de polypropylène glycol (Mn = 1000) sont introduits dans un réacteur de 2 litres. Le réacteur est ensuite porté à 150°C sous balayage d'azote. En parallèle, 462 g de styrène, 308 g de méthacrylate de méthyle, 240,8 g d'acrylate de butyle, et 39,2 g de méthacrylate de lauryle sont mélangés pour former un copolymère P1 de Tg = 41,2°C. Une solution de 31,5 g de peroxyde de ditertiobutyle (DTBP) et 15,8 g de peroctoate de tertiobutyle (TBPO) dans 47,25 g de 2-butoxyéthanol est également préparée. Ces deux préparations sont alors introduites en parallèle dans un réacteur, sur une durée de 3 heures à 150°C.

A la fin de ces additions, le milieu est gardé à la même température pendant 30 min, avant d'être refroidi à 135°C.

Parallèlement, un mélange de 56 g de styrène, 43,4 g de méthacrylate de méthyle, 44,8 g d'acrylate de butyle, 12,6 g de méthacrylate de lauryle, 39,2 g d'acide acrylique, 140 g de méthacrylate de 2-diméthylaminoéthyle, et 14 g de monométhacrylate de méthoxypolyéthylèneglycol (pour former un copolymère P2 de Tg = 23,8°C), ainsi qu'une solution de 10,5 g de DTBP et de 5,25 g de TBPO dans 15,75 de 2-butyoxyéthanol sont préparés.

Les deux préparations de copolymères P1 et P2 sont introduites dans un réacteur à 135°C pendant une durée de 2 heures. La température est ensuite gardée constante à 135°C pendant 1 heure supplémentaire.

L'extrait sec de la résine obtenue est de 85,3%, son indice d'acide de 23,6 mg de KOH/g, et son indice d'amine calculé de 35,7 mg de KOH/g. La masse moléculaire moyenne en nombre Mn de cette résine mesurée par GPC, avec comme solvant le THF et avec étalonnage par des polystyrènes monodisperses, est de 3300 g/mol.

### Préparation d'une dispersion aqueuse comprenant la résine organique comparative :

415,5 g de la résine organique ainsi préparée est partiellement neutralisée par l'ajout de 79.09 mL d'une solution à 10% en volume de diméthyléthanolamine dans l'eau sur une période de 10 minutes. Durant cette étape, la température passe de 90 à 65°C, et la vitesse d'agitation est de 150 rpm (rotations par minute). Après 15 minutes d'agitation à 65°C, 337,38 g d'eau sont introduits en 45 minutes sous une vitesse d'agitation de 250 rpm (rotations par minute), avec inversion de phase au cours de cette addition. La dispersion aqueuse obtenue est ensuite diluée avec de l'eau pour obtenir un extrait sec de 45,4%, un pH de 9, une viscosité de 1650 mPa.s, et une taille de particules mesurée de 214 nm avec un indice de polydispersité de 0,085.

La composition de la résine organique de l'exemple 4 comparatif est récapitulée dans le Tableau 4 ci-après (les quantités sont exprimées en % en poids) :

**[Tableau 4]**

| | Copolymère P1 | Copolymère P2 | Résine organique |
|---|---|---|---|
| Monomères | % poids P1 (par rapport au poids total de monomères) | % poids P2 (par rapport au poids total de monomères) | % poids (par rapport au poids total de monomères) |
| Styrène | 33,0 | 4,0 | 37,0 |
| Acrylate de butyle | 17,2 | 3,2 | 20,4 |
| Méthacrylate de méthyle | 22,0 | 3,1 | 25,1 |
| Méthacrylate de 2-diméthylaminoéthyle | 0 | 10,0 | 10,0 |
| Méthacrylate de lauryle | 2,8 | 0,9 | 3,7 |
| Acide acrylique | 0 | 2,8 | 2,8 |
| Monométhacrylate de méthoxy-polyéthylèneglycol (SR550 de Sartomer) | 0 | 1,0 | 1,0 |

### Exemple 5 : Test de stabilité des dispersions aqueuses préparées après vieillissement accéléré à l'étuve à 50°C :

La stabilité des dispersions aqueuses des exemples 1, 2, 3 et 4, a été évaluée en versant des échantillons de chacune des dispersions dans des flacons en verre de 25 mL, puis mis à l'étuve pendant 15 jours à 50°C. La taille des particules des dispersions aqueuses a été mesurée au bout de 15 jours, par diffraction de la lumière selon la norme ISO13321 indiquée ci-dessus.

Les résultats du test de stabilité sont présentés dans le Tableau 5 ci-dessous :

**[Tableau 5]**

| Dispersions aqueuses | Taille initiale des particules (nm) | Taille de particules après vieillissement (15 jours/50°C) |
|---|---|---|
| Dispersion aqueuse de l'exemple 1 | 142 | 142 |
| Dispersion aqueuse de l'exemple 2 | 184 | 199 |
| Dispersion aqueuse de l'exemple 3 | 195 | 209 |
| Dispersion aqueuse de l'exemple 4 | 214 | 257 |

La dispersion aqueuse de l'exemple 1 reste stable durant un mois à 50°C (pas d'évolution de la taille des particules au bout d'un mois), alors que les dispersions aqueuses des exemples 2 et 3 ont des tailles de particules qui augmentent après vieillissement accéléré, tout en restant acceptables. La taille des particules de la dispersion aqueuse de l'exemple 4 augmente significativement ; cette dernière est donc moins stable que les autres dispersions aqueuses.

### Exemple 6 : Préparation de compositions aqueuses de revêtements réticulables bi-composantes (compositions de peinture 1 à 4) comprenant les dispersions aqueuses des exemples 1 à 4 :

Les compositions de peinture réticulables bi-composantes sont récapitulées dans le Tableau 6 ci-après (les quantités sont exprimées en % en poids) :

**[Tableau 6]**

| Matières premières | Fournisseurs | Fonctions | Composition 1 (poids en g) | Composition 2 (poids en g) | Composition 3 (poids en g) | Composition 4 (poids en g) |
|---|---|---|---|---|---|---|
| Eau déminéralisée | - | Solvant | 10,05 | 12,64 | 12,96 | 12,58 |
| DYSPERBYK 190 | BYK | Agent dispersant | 2,38 | 2,37 | 2,39 | 2,39 |
| BYK 024 | BYK | Agent anti-mousse | 0,10 | 0,10 | 0,10 | 0,10 |
| TIONA 595 | CRISTAL | Pigment de TiO₂ | 21,66 | 21,61 | 21,70 | 21,73 |
| Dispersion aqueuse de l'exemple 1 | - | - | 59,01 | - | - | - |
| Dispersion aqueuse de l'exemple 2 | - | - | - | 56,11 | - | - |
| Dispersion aqueuse de l'exemple 3 | - | - | - | - | 56,09 | - |
| Dispersion aqueuse de l'exemple 4 | - | - | - | - | - | 56,57 |
| BYK 333 | BYK | Agent de surface | 0,25 | 0,25 | 0,25 | 0,25 |
| COAPUR XS 71 | COATEX | Epaississant polyuréthane | 2,20 | 2,20 | 2,21 | 2,21 |
| DER 917 | DOW | Résine époxy | 4,35 | 4,72 | 4,31 | 4,18 |
| TOTAL | | | 100 | 100 | 100 | 100 |

### Mode opératoire pour la préparation des compositions de peinture :

### Base de broyage :

Dans un premier temps, une base de broyage est préparée dans une cuve double enveloppe munie d'un système de refroidissement à l'eau de ville, en ajoutant successivement sous agitation, et dans l'ordre suivant : une partie de l'eau déminéralisée (4,5 g), le DYSPERBYK 190, et le BYK 024. Le TIONA 595 est ensuite ajouté progressivement, sous forte agitation à 1000 rpm (rotations par minute), puis dispersé pendant 20 minutes à 3000 rpm. La base de broyage est ensuite laissée au repos pendant 30 minutes.

### Partie A du système bi-composant :

La dispersion aqueuse de résine précédemment préparée est versée dans un récipient, à température ambiante (20°C), tout en agitant de manière à obtenir un vortex, puis sont ajoutés dans l'ordre suivant : le BYK 033, la base de broyage précédemment préparée, et le COAPUR XS 71. Le mélange est ensuite laissé au repos pendant 24 heures.

### Partie B du système bi-composant :

Pour former la composition de peinture finale, la résine époxy DER 917 est ajoutée lentement sur la partie A précédemment préparée, sous agitation moyenne, puis ajustée en ajoutant la quantité d'eau restante. Le mélange est laissé sous agitation pendant 10 minutes, puis 30 minutes au repos, avant application sur un support à l'aide d'un applicateur automatique.

### Résultats de dureté Persoz :

Les résultats de suivi de dureté des revêtements de peinture réticulés sont récapitulés dans le Tableau 7 ci-après :

**[Tableau 7]**

| Compositions de peinture | Epaisseur sèche du film (µm) | Dureté Persoz (s) | | | |
|---|---|---|---|---|---|
| | | à 1 jour | à 4 jours | à 7 jours | à 14 jours |
| Composition 1 | 78 | 39 | 82 | 101 | 111 |
| Composition 2 | 80 | 33 | 79 | 92 | 100 |
| Composition 3 | 81 | 29 | 51 | 65 | 73 |
| Composition 4 | 80 | 43 | 73 | 85 | 89 |

### Résultats de brillance, séchage et résistance chimique :

Les résultats de brillance, séchage et résistance chimique des revêtements de peinture réticulés obtenus à partir des compositions 1 à 4 sont récapitulés dans le Tableau 8 ci-après :

**[Tableau 8]**

| | Application sur plaque d'acier QD412 | | | Application sur plaque d'acier S46 | |
|---|---|---|---|---|---|
| Compositions de peinture | Brillance 20°/60° | Epaisseur sèche (µm) | Séchage hors poussière (min) | Epaisseur sèche (µm) | Résistance chimique (en secondes) |
| Composition 1 | 85/93 | 80 | 35 | 74 | 100-120 |
| Composition 2 | 87/94 | 75 | 36 | 77 | 100-120 |
| Composition 3 | 91/97 | 80 | 48 | 75 | 5 |
| Composition 4 | 81/93 | 80 | 36 | 74 | 10 |

Les revêtements de peinture réticulés obtenus à partir des compositions 1 et 2 présentent un bon aspect visuel avec une bonne filmification et un bon brillant. En outre, ce sont les revêtements qui présentent les meilleures propriétés mécaniques et la meilleure résistance chimique.

Ces films représentatifs de l'invention ne présentent par ailleurs aucune piqûre (cloquage), après évaluation selon la norme ISO 4628-2.

### Exemple 7 : Préparation d'une résine comparative comprenant un mélange physique de copolymères P1 et P2 (absence de copolymérisation)

Le but de cet essai est de synthétiser les copolymères P1 et P2 séparément puis de les mélanger suivant le ratio décrit dans les exemples de l'invention : à savoir 75% en poids0 de P1 et 25% en poids de P2. Il s'agira ensuite de vérifier si le polymère obtenu après mélange des deux copolymères est émulsifiable dans l'eau selon le procédé décrit dans l'invention et si celui-ci permet l'obtention d'émulsions stables dans le temps.

### Synthèse de la résine organique P1 :

180 g de 2-butoxyéthanol et 78 g de polypropylène glycol (Mn = 1000 g/mol) sont introduits dans un réacteur de 2 litres. Le réacteur est ensuite porté à 150°C sous balayage d'azote. En parallèle, 620,10 g de styrène, 390 g de méthacrylate de méthyle, 283,95 g d'acrylate de butyle, 55,95 g de méthacrylate de lauryle, et 150 g de méthacrylate de 2-diméthylaminoéthyle, sont mélangés pour former un copolymère P1 de Tg = 41 ,2°C. Une solution de 45 g de peroxyde de ditertiobutyle (DTBP) et 22,5 g de peroctoate de tertiobutyle (TBPO) dans 67,5 g de 2-butoxyéthanol est également préparée. Ces deux préparations sont alors introduites en parallèle dans le réacteur, sur une durée de 3 heures à 150°C.

A la fin de ces additions, le milieu est gardé à la même température pendant 1 heure, avant d'être refroidi.

L'extrait sec de la résine organique obtenue est de 83,4%.

### Synthèse de la résine organique P2 :

180 g de 2-butoxyéthanol et 78 g de polypropylène glycol (Mn = 1000 g/mol) sont introduits dans un réacteur de 2 litres. Le réacteur est ensuite porté à 135°C sous balayage d'azote. En parallèle, 360 g de styrène, 336 g de méthacrylate de méthyle, 372 g d'acrylate de butyle, 54 g de méthacrylate de lauryle, 168 g d'acide acrylique, 150 g de méthacrylate de 2-diméthylaminoéthyle et 15 g de monométhacrylate de méthoxypolyéthylèneglycol sont mélangés (afin de former un copolymère P2 de Tg = 23,8°C).

Une solution de 45 g de peroxyde de ditertiobutyle (DTBP) et 22,5 g de peroctoate de tertiobutyle (TBPO) dans 67,5 g de 2-butoxyéthanol est également préparée.

Ces deux préparations sont alors introduites en parallèle dans le réacteur, sur une durée de 2 heures à 135°C.

Cependant, la synthèse de ce copolymère est impossible en raison de la formation d'un solide blanc dans le milieu réactionnel au cours des 15 premières minutes. Ce solide blanc est dû à l'homopolymérisation de l'acide acrylique présent en grande quantité dans la composition de P2.

| | Copolymère P1 | Copolymère P2 | Résine organique |
|---|---|---|---|
| Monomères | % poids P1 (par rapport au poids total de monomères de P1) | % poids P2 (par rapport au poids total de monomères de P2) | % poids après mélange P1/P2 ; 75/25 (par rapport au poids total de monomères) |
| Styrène | 41,34 | 24 | 37,0 |
| Acrylate de butyle | 18,93 | 24,8 | 20,4 |
| Méthacrylate de méthyle | 26 | 22,4 | 25,1 |
| Méthacrylate de 2-diméthylaminoéthyle | 10 | 10,0 | 10,0 |
| Méthacrylate de lauryle | 3,73 | 3,6 | 3,7 |
| Acide acrylique | 0 | 11,2 | 2,8 |
| Monométhacrylate de méthoxy-polyéthylèneglycol (SR550 de Sartomer) | 0 | 4 | 1,0 |
| Indice d'acide (mgKOH/g) | 0 | 87,2 | 21,8 |

Le pourcentage d'acide acrylique dans le copolymère P2 est déterminé de manière à obtenir un indice d'acide global après mélange de 75% de P1 et 25% de P2 de 21,8 mgKOH/g, nécessaire pour la mise en émulsion du polymère après l'étape de neutralisation et d'inversion de phase.

Il est donc impossible de synthétiser P1 et P2 séparément afin d'obtenir, après simple mélange physique et sans copolymérisation, un polymère ayant les mêmes caractéristiques que celui décrit dans l'invention. Ceci montre l'intérêt de copolymériser P1 et P2, l'un à la suite de l'autre dans le même milieu réactionnel.

## Revendications

1. Résine organique comprenant dans sa composition deux copolymères P1 et P2 dans des proportions en poids de P1/P2 allant de 90/10 à 60/40, et de préférence de 80/20 à 70/30, **caractérisée en ce que** lesdits copolymères P1 et P2 sont copolymérisés l'un à l'autre, ledit copolymère P1 porte au moins un groupement amine tertiaire et ledit copolymère P2 porte au moins un groupement acide carboxylique.

2. Résine selon la revendication 1 **caractérisée en ce que** lesdits copolymères P1 et P2 portent chacun au moins un groupement amine tertiaire.

3. Résine selon la revendication 1 ou la revendication 2 **caractérisée en ce que** ledit au moins un groupement amine tertiaire est porté par au moins un monomère éthyléniquement insaturé a) ; de préférence un monomère (méth)acrylate d'aminoalkyle dans lequel ledit alkyle, linéaire ou ramifié, comprend de 1 à 12 atomes de carbone ; ledit monomère a) étant plus préférentiellement choisi parmi le méthacrylate de 2-diméthylaminoéthyle (MADAME), l'acrylate de 2-(diméthylamino)éthyle (ADAME), le méthacrylate de 2-diéthylaminoéthyle, l'acrylate de 2-(diéthylamino)éthyle, N-(3-(N,N-diméthylamino)propyl) acrylamide, N-(3-(N,N-diméthylamino)propyl) méthacrylamide, acrylate de 3-diméthyl aminopropyle, méthacrylate de 3-diméthyl aminopropyle, acrylate de 3-diéthylaminopropyle, méthacrylate de 3-diéthylaminopropyle, 4-(N,N-diméthylamino)styrène, 4-(N,N-diéthylamino)styrène, 4-vinylpyridine, 2-diméthylaminoethyl vinyl éther, 2-diéthylaminoethyl vinyl éther, 3-diméthylaminopropyl vinyl éther, 3-diéthylaminopropyl vinyl éther, 4-diméthylaminobutyl vinyl éther et 6-diméthylaminohexyl vinyl éther et leurs mélanges ; plus préférentiellement encore le méthacrylate de 2-diméthylaminoéthyle (MADAME), l'acrylate de 2-(diméthylamino)éthyle (ADAME), le méthacrylate de 2-diéthylaminoéthyle, et l'acrylate de 2-(diéthylamino)éthyle.

4. Résine selon l'une des revendications 1 à 3 **caractérisée en ce que** lesdits copolymères P1 et/ou P2 sont des copolymères acrylique, vinylique et/ou vinylique-acrylique, y compris styrène-acrylique.

5. Résine selon l'une des revendications 1 à 4 **caractérisée en ce que** ledit copolymère P2 comprend au moins un groupement alcoxylé ou polyalcoxylé.

6. Résine selon la revendication 5 **caractérisée en ce que** ledit copolymère P2 comprend au moins un monomère éthyléniquement insaturé porteur d'au moins un groupement alcoxylé ou polyalcoxylé d), et de préférence un monomère mono(méth)acrylate alcoxylé ou un monomère mono(méth)acrylate polyalcoxylé choisi parmi le mono(méth)acrylate d'étheralkyle dans lequel ledit alkyle, linéaire ou ramifié, comprend de préférence de 1 à 12 atomes de carbone, le mono(méth)acrylate d'alcoxy-polyalkylèneglycol, et le mono(méth)acrylate d'aryloxy-polyalkylèneglycol.

7. Dispersion aqueuse de résine **caractérisée en ce qu'**elle comprend au moins une résine selon l'une des revendications 1 à 6 sous forme dispersée dans l'eau, ladite résine étant partiellement ou totalement neutralisée par un agent neutralisant telle qu'une amine organique, et de préférence par une amine tertiaire telle que la diméthylaminoéthanol (DMAE) ou la triéthanolamine (TEOH).

8. Procédé de préparation d'une dispersion aqueuse de résine selon la revendication 7 **caractérisé en ce qu'**il comprend les étapes suivantes :
i- préparation d'une résine selon l'une des revendications 1 à 6 en solution dans au moins un diluant organique, et de préférence dans au moins un diluant organique polaire,
ii- neutralisation partielle ou totale des groupements acide carboxylique de ladite résine, par ajout d'une amine, et de préférence par ajout d'une amine tertiaire, sans affecter les autres groupements de ladite résine,
iii- préparation d'une dispersion aqueuse de ladite résine par addition d'eau jusqu'à inversion de phase, de préférence à une température allant de 50 à 80°C.

9. Procédé selon la revendication 8 **caractérisé en ce que** ladite résine est une résine acrylique, vinylique ou vinylique-acrylique, y compris styrène-acrylique, et **en ce que** l'étape i- de préparation de ladite résine est réalisée par polymérisation radicalaire.

10. Procédé selon la revendication 8 ou la revendication 9 **caractérisé en ce que** l'étape i- de préparation de ladite résine comprend la préparation desdits copolymères P1 et P2 en deux étapes successives i1- et i2- dans le même réacteur :
i1- la préparation en solution d'un premier copolymère P1 tel que défini selon l'une des revendications précédentes, et
i2- la préparation d'un deuxième copolymère P2 tel que défini selon l'une des revendications précédentes, dans le même réacteur contenant déjà ledit premier copolymère P1.

11. Composition réticulable bi-composante **caractérisée en ce qu'**elle comprend, en milieu solvant organique ou en milieux aqueux, et de préférence en milieu aqueux, au moins une résine selon l'une des revendications 1 à 6, ou au moins une dispersion aqueuse selon la revendication 7, et comme agent réticulant une résine époxy.

12. Composition réticulable selon la revendication 11 **caractérisée en ce qu'**il s'agit d'une composition de revêtement parmi peinture, vernis, encre, adhésif, colle, et de préférence une composition aqueuse de revêtement parmi les compositions aqueuses de peinture ou de vernis.

13. Substrat revêtu d'une composition de revêtement réticulable selon la revendication 11 ou 12 **caractérisé en ce qu'**il est choisi parmi les substrats en métal, verre, bois, y compris aggloméré et contreplaqué, plastique, métal, béton, plâtre, composite, textile.

14. Utilisation d'une résine selon l'une des revendications 1 à 6, ou d'une dispersion aqueuse selon la revendication 7, dans une composition réticulable bi-composante comprenant comme agent réticulant une résine époxy.

15. Produit réticulé **caractérisé en ce qu'**il résulte de l'utilisation d'une résine selon l'une des revendications 1 à 6, ou d'une dispersion aqueuse selon la revendication 7, avec comme agent réticulant une résine époxy.

## Patentansprüche

1. Organisches Harz, umfassend in seiner Zusammensetzung zwei Copolymere P1 und P2 in Gewichtsanteilen von P1/P2 im Bereich von 90/10 bis 60/40 und vorzugsweise von 80/20 bis 70/30, **dadurch gekennzeichnet, dass** die Copolymere P1 und P2 miteinander copolymerisiert sind, das Copolymer P1 mindestens eine tertiäre Amingruppe trägt und das Copolymer P2 mindestens eine Carbonsäuregruppe trägt.

2. Harz nach Anspruch 1, **dadurch gekennzeichnet, dass** die Copolymere P1 und P2 jeweils mindestens eine tertiäre Amingruppe tragen.

3. Harz nach Anspruch 1 oder Anspruch 2, **dadurch gekennzeichnet, dass** die mindestens eine tertiäre Aminogruppe von mindestens einem ethylenisch ungesättigten Monomer a), vorzugsweise einem Aminoalkyl(meth)acrylat-Monomer, in dem das lineare oder verzweigte Alkyl 1 bis 12 Kohlenstoffatome umfasst, getragen wird; wobei das Monomer a) weiter bevorzugt ausgewählt ist aus 2-Dimethylaminoethylmethacrylat (DMAEMA), 2-(Dimethylamino)ethylacrylat (DMAEA), 2-Diethylaminoethylmethacrylat, 2-(Diethylamino)ethylacrylat, N-(3-(N,N-Dimethylamino)propyl)acrylamid, N-(3-(N,N-Dimethylamino)propyl)methacrylamid, 3-(Dimethylamino)propylacrylat, 3-(Dimethylamino)propylmethacrylat, 3-(Diethylamino)propylacrylat, 3-(Diethylamino)propylmethacrylat, 4-(N,N-Dimethylamino)styrol, 4-(N,N-Diethylamino)styrol, 4-Vinylpyridin, 2-Dimethylaminoethylvinylether, 2-Diethylaminoethylvinylether, 3-Dimethylaminopropylvinylether, 3-Diethylaminopropylvinylether, 4-Dimethylaminobutylvinylether und 6-Dimethylaminohexylvinylether und Mischungen davon; noch weiter bevorzugt 2-Dimethylaminoethylmethacrylat (DMAEMA), 2-(Dimethylamino)ethylacrylat (DMAEA), 2-Diethylaminoethylmethacrylat und 2-(Diethylamino)ethylacrylat.

4. Harz nach einem der Ansprüche 1 bis 3, **dadurch gekennzeichnet, dass** es sich bei den Copolymeren P1 und/oder P2 um Acryl-, Vinyl- und/oder Vinyl-AcrylCopolymere einschließlich Styrol-Acryl-Copolymeren handelt.

5. Harz nach einem der Ansprüche 1 bis 4, **dadurch gekennzeichnet, dass** das Polymer P2 mindestens eine alkoxylierte oder polyalkoxylierte Gruppe umfasst.

6. Harz nach Anspruch 5, **dadurch gekennzeichnet, dass** das Copolymer P2 mindestens ein ethylenisch ungesättigtes Monomer mit mindestens einer alkoxylierten oder polyalkoxylierten Gruppe d) und vorzugsweise ein alkoxyliertes Mono(meth)acrylat-Monomer oder ein polyalkoxyliertes Mono(meth)acrylat-Monomer, das aus Etheralkylmono(meth)acrylat, wobei das lineare oder verzweigte Alkyl vorzugsweise 1 bis 12 Kohlenstoffatome umfasst, Alkoxypolyalkylenglykolmono(meth)acrylat und Aryloxypolyalkylenglykolmono(meth)acrylat ausgewählt ist, umfasst.

7. Wässrige Harzdispersion, **dadurch gekennzeichnet, dass** sie mindestens ein Harz nach einem der Ansprüche 1 bis 6 in in Wasser dispergierter Form umfasst, wobei das Harz teilweise oder vollständig durch ein Neutralisationsmittel wie ein organisches Amin und vorzugsweise durch ein tertiäres Amin wie Dimethylaminoethanol (DMAE) oder Triethanolamin (TEOH) neutralisiert ist.

8. Verfahren zur Herstellung einer wässrigen Harzdispersion nach Anspruch 7, **dadurch gekennzeichnet, dass** es die folgenden Schritte umfasst:
i- Herstellen eines Harzes nach einem der Ansprüche 1 bis 6 in Lösung in mindestens einem organischen Verdünnungsmittel und vorzugsweise in mindestens einem polaren organischen Verdünnungsmittel,
ii- teilweises oder vollständiges Neutralisieren der Carbonsäuregruppen des Harzes durch Zugeben eines Amins und vorzugsweise durch Zugeben eines tertiären Amins ohne Beeinflussung der anderen Gruppen des Harzes,
iii- Herstellen einer wässrigen Dispersion des Harzes durch Zugeben von Wasser bis zur Phaseninversion, vorzugsweise bei einer Temperatur im Bereich von 50 bis 80 °C.

9. Verfahren nach Anspruch 8, **dadurch gekennzeichnet, dass** es sich bei dem Harz um ein Acryl-, Vinyl- und/oder Vinyl-Acryl-Harz einschließlich Styrol-Acryl-Harz handelt und dass Schritt i- des Herstellens des Harzes durch Radikalpolymerisation durchgeführt wird.

10. Verfahren nach Anspruch 8 oder Anspruch 9, **dadurch gekennzeichnet, dass** der Schritt i- des Herstellens des Harzes das Herstellen der Copolymere P1 und P2 in zwei aufeinanderfolgenden Schritten i1- und i2- im selben Reaktor umfasst:
i1- Herstellen eines ersten Copolymers P1 gemäß einem der vorhergehenden Ansprüche in Lösung und
i2- Herstellen eines zweiten Copolymers P2 gemäß einem der vorhergehenden Ansprüche in demselben Reaktor, der bereits das erste Copolymer P1 enthält.

11. Zweikomponentige vernetzbare Zusammensetzung, **dadurch gekennzeichnet, dass** sie in einem organischen Lösungsmittelmedium oder in einem wässrigen Medium, und vorzugsweise in einem wässrigen Medium, mindestens ein Harz nach einem der Ansprüche 1 bis 6 oder mindestens eine wässrige Dispersion nach Anspruch 7 und ein Epoxidharz als Vernetzungsmittel umfasst.

12. Vernetzbare Zusammensetzung nach Anspruch 11, **dadurch gekennzeichnet, dass** es sich um eine Beschichtungszusammensetzung aus der Gruppe Anstrichmittel, Lack, Tinte, Haftmittel, Kleber und vorzugsweise eine wässrige Beschichtungszusammensetzung aus der Gruppe wässriger Anstrichmittel- oder Lackzusammensetzungen handelt.

13. Substrat, das mit einer vernetzbaren Beschichtungszusammensetzung nach Anspruch 11 oder 12 beschichtet ist, **dadurch gekennzeichnet, dass** es aus Substraten aus Metall, Glas, Holz einschließlich Spanholz und Sperrholz, Kunststoff, Metall, Beton, Gips, Verbundstoff, Textil ausgewählt ist.

14. Verwendung eines Harzes nach einem der Ansprüche 1 bis 6 oder einer wässrigen Dispersion nach Anspruch 7 in einer zweikomponentigen vernetzbaren Zusammensetzung, die ein Epoxidharz als Vernetzungsmittel umfasst.

15. Vernetztes Produkt, **dadurch gekennzeichnet, dass** es aus der Verwendung eines Harzes nach einem der Ansprüche 1 bis 6 oder einer wässrigen Dispersion nach Anspruch 7 mit einem Epoxidharz als Vernetzungsmittel resultiert.

## Claims

1. Organic resin comprising in its composition two copolymers P1 and P2 in weight proportions of P1/P2 ranging from 90/10 to 60/40, and preferably from 80/20 to 70/30, **characterized in that** said copolymers P1 and P2 are copolymerized with one another, said copolymer P1 bears at least one tertiary amine group and said copolymer P2 bears at least one carboxylic acid group.

2. Resin according to Claim 1, **characterized in that** said copolymers P1 and P2 each bear at least one tertiary amine group.

3. Resin according to Claim 1 or Claim 2, **characterized in that** said at least one tertiary amine group is borne by at least one ethylenically unsaturated monomer a); preferably an aminoalkyl (meth)acrylate monomer wherein said linear or branched alkyl comprises from 1 to 12 carbon atoms; said monomer a) being more preferentially chosen from 2-dimethylaminoethyl methacrylate (DMAEMA), 2-(dimethylamino)ethyl acrylate (DMAEA), 2-diethylaminoethyl methacrylate, 2-(diethylamino)ethyl acrylate, N-(3-(N,N-dimethylamino)propyl)acrylamide, N-(3-(N,N-dimethylamino)propyl)methacrylamide, 3-(dimethylamino)propyl acrylate, 3-(dimethylamino)propyl methacrylate, 3-(diethylamino)propyl acrylate, 3-(diethylamino)propyl methacrylate, 4-(N,N-dimethylamino)styrene, 4-(N,N-diethylamino)styrene, 4-vinylpyridine, 2-dimethylaminoethyl vinyl ether, 2-diethylaminoethyl vinyl ether, 3-dimethylaminopropyl vinyl ether, 3-diethylaminopropyl vinyl ether, 4-dimethylaminobutyl vinyl ether and 6-dimethylaminohexyl vinyl ether and mixtures thereof; more preferentially still 2-dimethylaminoethyl methacrylate (DMAEMA), 2-(dimethylamino)ethyl acrylate (DMAEA), 2-diethylaminoethyl methacrylate, and 2-(diethylamino)ethyl acrylate.

4. Resin according to one of Claims 1 to 3, **characterized in that** said copolymers P1 and/or P2 are acrylic, vinyl and/or vinyl-acrylic copolymers, including styrene-acrylic copolymers.

5. Resin according to one of Claims 1 to 4, **characterized in that** said copolymer P2 comprises at least one alkoxylated or polyalkoxylated group.

6. Resin according to Claim 5, **characterized in that** said copolymer P2 comprises at least one ethylenically unsaturated monomer bearing at least one alkoxylated or polyalkoxylated group d), and preferably an alkoxylated mono(meth)acrylate monomer or a polyalkoxylated mono(meth)acrylate monomer chosen from etheralkyl mono(meth)acrylate wherein said linear or branched alkyl preferably comprises from 1 to 12 carbon atoms, alkoxy-polyalkylene glycol mono(meth)acrylate, and aryloxy-polyalkylene glycol mono(meth)acrylate.

7. Aqueous resin dispersion, **characterized in that** it comprises at least one resin according to one of Claims 1 to 6 in water-dispersed form, said resin being partially or completely neutralized by a neutralizing agent such as an organic amine, and preferably by a tertiary amine such as dimethylaminoethanol (DMAE) or triethanolamine (TEOH).

8. Process for preparing an aqueous resin dispersion according to Claim 7, **characterized in that** it comprises the following steps:
i- preparing a resin according to one of Claims 1 to 6 in solution in at least one organic diluent, and preferably in at least one polar organic diluent,
ii- partially or completely neutralizing the carboxylic acid groups of said resin, by adding an amine, and preferably by adding a tertiary amine, without affecting the other groups of said resin,
iii- preparing an aqueous dispersion of said resin by adding water until phase inversion, preferably at a temperature ranging from 50°C to 80°C.

9. Process according to Claim 8, **characterized in that** said resin is an acrylic, vinyl or vinyl-acrylic resin, including styrene-acrylic resin, and **in that** step i- of preparing said resin is carried out by radical polymerization.

10. Process according to Claim 8 or Claim 9, **characterized in that** step i- of preparing said resin comprises the preparation of said copolymers P1 and P2 in two successive steps i1- and i2- in the same reactor:
i1- preparing, in solution, a first copolymer P1 as defined in one of the preceding claims, and
i2- preparing a second copolymer P2 as defined in one of the preceding claims, in the same reactor already containing said first copolymer P1.

11. Two-component crosslinkable composition, **characterized in that** it comprises, in an organic solvent medium or in an aqueous medium, and preferably in an aqueous medium, at least one resin according to one of Claims 1 to 6, or at least one aqueous dispersion according to Claim 7, and an epoxy resin as crosslinking agent.

12. Crosslinkable composition according to Claim 11, **characterized in that** it is a coating composition from among paint, varnish, ink, adhesive, glue, and preferably an aqueous coating composition from among aqueous paint or varnish compositions.

13. Substrate coated with a crosslinkable coating composition according to Claim 11 or 12, **characterized in that** it is chosen from substrates made of metal, glass, wood, including chipboard and plywood, plastic, metal, concrete, plaster, composite, textile.

14. Use of a resin according to one of Claims 1 to 6, or of an aqueous dispersion according to Claim 7, in a two-component crosslinkable composition comprising an epoxy resin as crosslinking agent.

15. Crosslinked product, **characterized in that** it results from the use of a resin according to one of Claims 1 to 6, or of an aqueous dispersion according to Claim 7, with an epoxy resin as crosslinking agent.
